# EUROPÄISCHE PATENTANMELDUNG

(11) **EP 2 433 737 A1**
(43) Veröffentlichungstag der Anmeldung: **28.03.2012**
(21) Anmeldenummer: 11007809.4
(22) Anmeldetag: 26.09.2011
(51) Int. Cl.: B23H 9/04, B23Q 1/76

(54) **Vorrichtung zum Texturieren einer Walze**

(30) Priorität: 27.09.2010 DE 102010046558
(71) Anmelder: H. Kleinknecht & Co. GmbH, 57080 Siegen-Eisern (DE)
(72) Erfinder: Hauck, Christoph, 57258 Freudenberg (DE); Muscheid, Bernd, 57234 Wilnsdorf (DE)
(74) Vertreter: Dörner, Kötter & Kollegen

(57) **Zusammenfassung**

Die Erfindung betrifft eine Vorrichtung zum Texturieren einer Walze, umfassend einen Treibstock, einen Reitstock sowie wenigstens einen Setzstock zur Aufnahme einer Walze, die auf wenigstens einer Führungsschiene geführt sind, sowie beidseitig einer aufgenommenen Walze angeordnete Elektroden, wobei wenigstens ein Antrieb angeordnet ist, über den der Treibstock, der Reitstock und der wenigstens eine Setzstock entlang der wenigstens einen Führungsschiene bewegbar ist. Es ist wenigstens eine Mitnehmerstange (61) angeordnet, welche über einen Antrieb (63) längs der Vorrichtung linear bewegbar ist, wobei der Treibstock (2), der Reitstock (3) und der wenigstens eine Setzstock (4) wenigstens eine Mitnehmerdurchführung (22, 32, 42) aufweisen, durch welche die wenigstens eine Mitnehmerstange (61) geführt ist und die mit Mitteln zur temporären Verbindung mit der Mitnehmerstange (61) versehen ist.

## Beschreibung

Die Erfindung betrifft eine Vorrichtung zum Texturieren einer Walze nach dem Oberbegriff des Patentanspruchs 1.

Zur Texturierung einer Walze kommt regelmäßig ein Erodierprozess zum Einsatz. Dieser als Electrical-Discharge-Texturing (EDT) bezeichnete Prozess ermöglicht eine hochgenaue Konturierung der Walzenoberfläche. Beim EDT-Prozess werden Elektroden auf einen exakt geregelten Spalt zur rotierenden Walzenoberfläche herangefahren und in axialer Richtung osziliert. Durch den Erodierimpuls formieren sich die Partikel im Dielektrikum zwischen Walze und Elektrode zu einer Dipolbrücke, wodurch ein Stromfluss erzielt wird. Hierdurch wird ein kleiner Bereich der Walzenoberfläche aufgeschmolzen und es bildet sich im Dielektrikum eine Gasblase. Wird der Erodierimpuls abgeschaltet, implodiert die Gasblase, wodurch das geschmolzene Walzenmaterial herausgeschleudert wird. Durch die hierdurch erzeugten muldenförmigen Vertiefungen wird insgesamt eine diffuse Struktur erzielt. Die gewünschte Rauheit ist unabhängig von der Walzenhärte über Parameter wie Spannung, Steuerzeiten und Abstand der Elektroden einstellbar.

Bei derzeitigen EDT-Vorrichtungen wird die Walze innerhalb eines Walzenbeckens positioniert, das mit einem Dielektrikum befüllt wird, sodass die Walze etwa zur Hälfte ihres Durchmessers in das Dielektrikum eintaucht. Dabei wird die Walze zwischen einem Treibstock und einem Reitstock eingespannt, wobei sie auf einem oder mehreren Setzstöcken aufliegt. Hierzu sind Treibstock, Reitstock sowie Setzstöcke auf einer Führungsschiene verschiebbar angeordnet. Zur Bewegung der Treib-, Reit- und Setzstöcke entlang der Führungsschiene zur Einspannung der in ihrer Länge variablen Walzen weisen diese jeweils einen Antrieb auf. Zusätzlich weisen die Setzstöcke eine Hebevorrichtung auf, mittels welcher der Abstand zwischen Setzstock und Führungsschiene veränderbar ist, so dass eine vertikale Anstellung des Setzstockes an die - im Durchmesser variablen - Walzen ermöglicht ist.

Nachteilig an den bekannten Vorrichtungen ist, dass die Positionierung der Treib-, Reit- und Setzstöcke über die einzelnen separat zu installierenden und zu wartenden Antriebe aufwändig ist. Zudem kann es vorkommen, dass die Antriebe durch eindringendes Dielektrikum beeinträchtigt werden. Darüber hinaus birgt ein Kontakt der regelmäßig als Hydraulikmotor ausgeführten Antriebe mit dem Dielektrikum die Gefahr einer Kontaminierung des Dielektrikums mit Hydrauliköl, was eine Beeinträchtigung des Erodierprozesses zur Folge haben kann.

Hier will die Erfindung Abhilfe schaffen. Der Erfindung liegt die Aufgabe zugrunde, eine Vorrichtung zum Texturieren einer Walze zu schaffen, bei der eine vereinfachte und zuverlässige Positionierung der Treib-, Reit- und Setzstöcke ermöglicht ist. Gemäß der Erfindung wird diese Aufgabe durch die Merkmale des kennzeichnenden Teils des Patentanspruchs 1 gelöst.

Mit der Erfindung ist eine Vorrichtung zum Texturieren einer Walze geschaffen, bei der eine vereinfachte und zuverlässige Positionierung der Treib-, Reit- und Setzstöcke ermöglicht ist. Durch die Anordnung der wenigstens einen Mitnehmerstange, welche über einen Antrieb längs der Vorrichtung linear verschiebbar ist und mit der die Treib-, Reit- und Setzstöcke temporär verbindbar sind, ist deren Positionierung über einen einzigen Antrieb ermöglicht, der zudem außerhalb des Walzenbeckens angeordnet ist.

In Weiterbildung der Erfindung sind genau zwei Mitnehmerstangen angeordnet, welche über wenigstens zwei Querstreben verbunden sind, sodass ein rechteckförmiger Rahmen gebildet ist. Hierdurch ist eine stabile und robuste Antriebsanordnung erzielt. Durch die jeweilige Ankopplung der Treib-, Reit- und Setzstöcke an zwei parallel zueinander angeordnete Mitnehmerstangen ist eine exakt lineare Bewegung bewirkt; ein mögliches Verkannten eines Treib-, Reit- oder Setzstockes ist so vermieden.

In Ausgestaltung der Erfindung ist die wenigstens eine Mitnehmerstange über den Treibstock linear bewegbar, der mit einem Antrieb verbunden ist, über den er linear entlang der wenigstens einen Führungsschiene verfahrbar ist. Dabei weist der Treibstock bevorzugt wenigstens eine mit einem Innengewinde versehene Spindelaufnahme auf, in die eine Gewindespindel eingreift, die über einen Antrieb rotierbar ist. Hierdurch ist eine Bewegung der wenigstens einen Mitnehmerstange über einen außerhalb des Walzenbeckens der Vorrichtung angeordneten Antrieb ermöglicht, wodurch eine Kontaminierung des innerhalb des Walzenbeckens befindlichen Dielektrikums mit Schmiermitteln oder sonstigen Verunreinigungen eines Antriebs ausgeschlossen ist.

In weiterer Ausgestaltung der Erfindung weist der Treibstock zwei gegenüberliegend angeordnete, mit einem Innengewinde versehene Spindelaufnahmen auf, in die jeweils eine Gewindespindel eingreift, wobei die beiden Gewindespindeln über wenigstens einen Antrieb synchron rotierbar sind. Hierdurch ist ein exakt linearer Antrieb des Treibstocks bewirkt; ein mögliches Verkanten des Treibstocks ist so vermieden. Alternativ kann der Treibstock auch direkt über einen - aufwändigeren - Linearantrieb angetrieben sein. In diesem Fall kann eine derartige Spindelanordnung entfallen.

In Weiterbildung der Erfindung sind die beiden Gewindespindeln über zwei synchron gesteuerte Antriebe rotierbar. Durch die separaten synchron betriebenen Antriebe ist eine sehr genau steuerbare Rotation der Gewindespindeln ermöglicht. Selbstverständlich kann die synchrone Rotation der beiden Gewindespindeln auch mittels eines einzigen Antriebs über ein entsprechendes Getriebe erfolgen, was seinerseits jedoch mechanischem Verschleiß unterliegt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

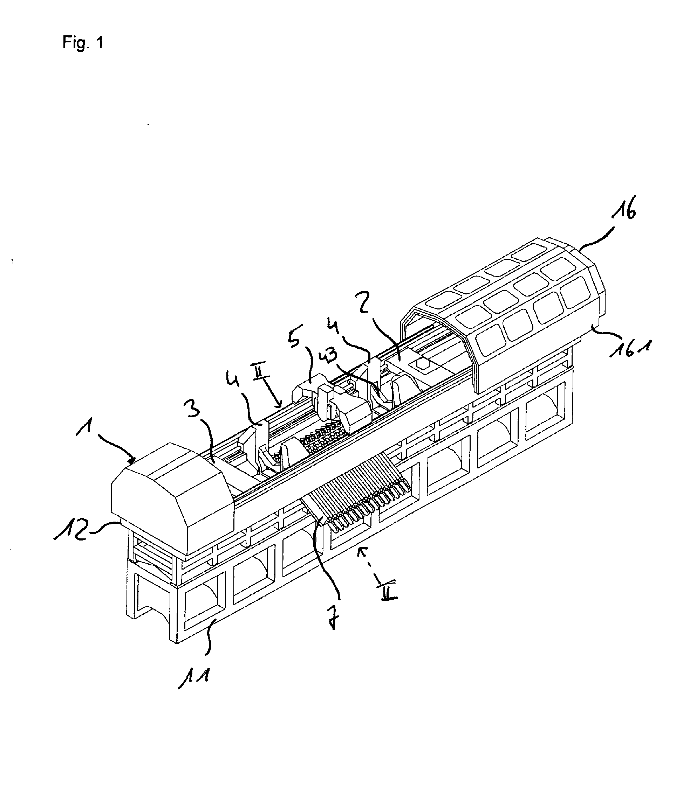

- Figur 1: die schematische räumliche Darstellung einer Vorrichtung zum Tex-turieren einer Walze;
- Figur 2: die schematische Darstellung der Vorrichtung gemäß Figur 1 im Schnitt II-II;

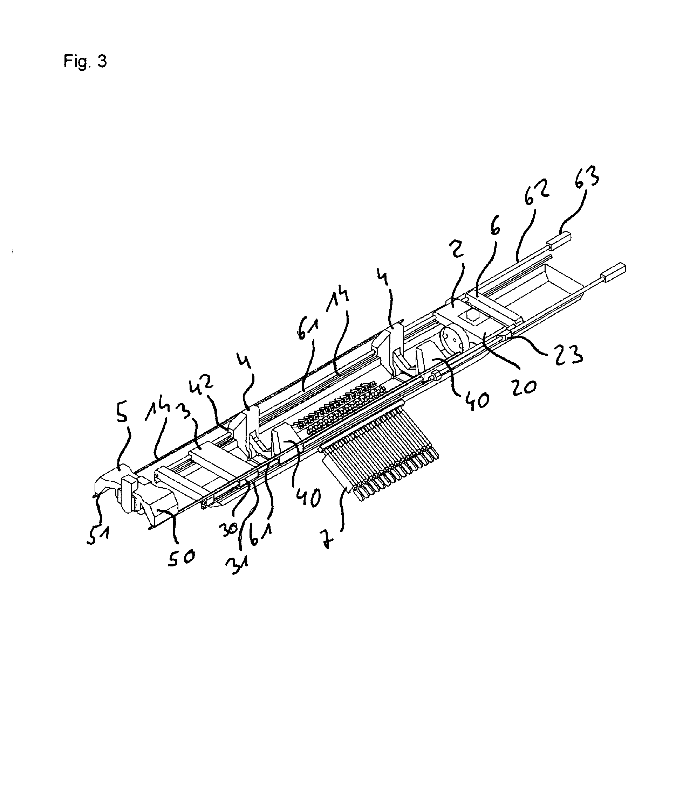

- Figur 3: die Detailansicht der Vorrichtung gemäß Figur 1 ohne Maschinen-korpus und

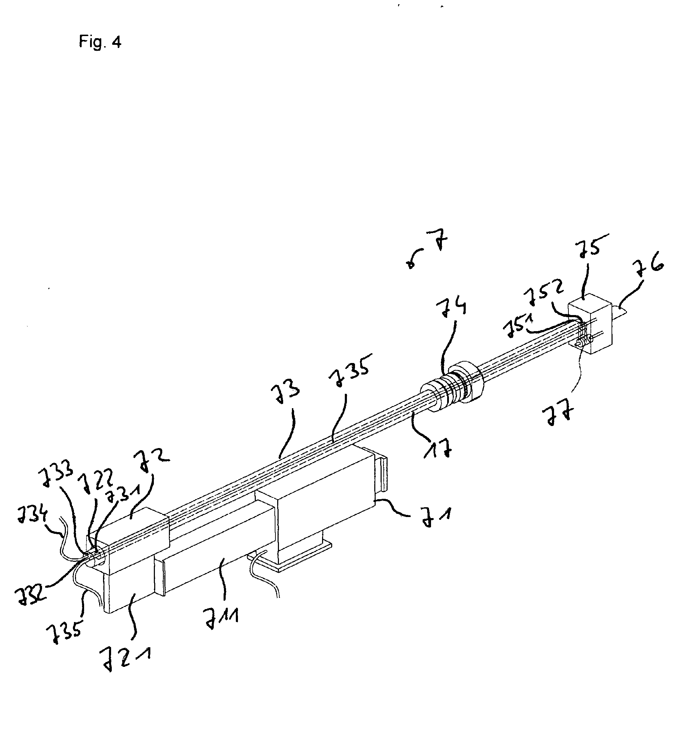

- Figur 4: die schematische Darstellung einer Elektrodeneinheit der Vorrich-tung gemäß Figur 1.

Die als Ausführungsbeispiel gewählte Vorrichtung zum Texturieren einer Walze umfasst im Wesentlichen einen Maschinenkorpus 1 mit einem Walzenbecken 15, in dem in bekannter Art und Weise ein Treibstock 2 sowie ein Reitstock 3 auf einer gemeinsamen Achse beabstandet zueinander angeordnet sind. Zwischen Treibstock 2 und Reitstock 3 sind zwei Setzstöcke 4 positioniert, welche jeweils mit einem Erdungsband 43 versehen sind, an dem eine in die durch Treibstock 3, Reitstock 4 und Setzstöcke 5 gebildete Aufnahme eingespannte Walze 8 anliegt. Das Walzenbecken 15 dient der Aufnahme eines Dielektrikums 17. An den Seitenwänden des Walzenbeckens 5 sind gegenüberliegend zwei Reihen von Elektrodeneinheiten 3 angeordnet. Die Vorrichtung ist über eine teleskopartig ausgebildete Umhausung 16 einkapselbar.

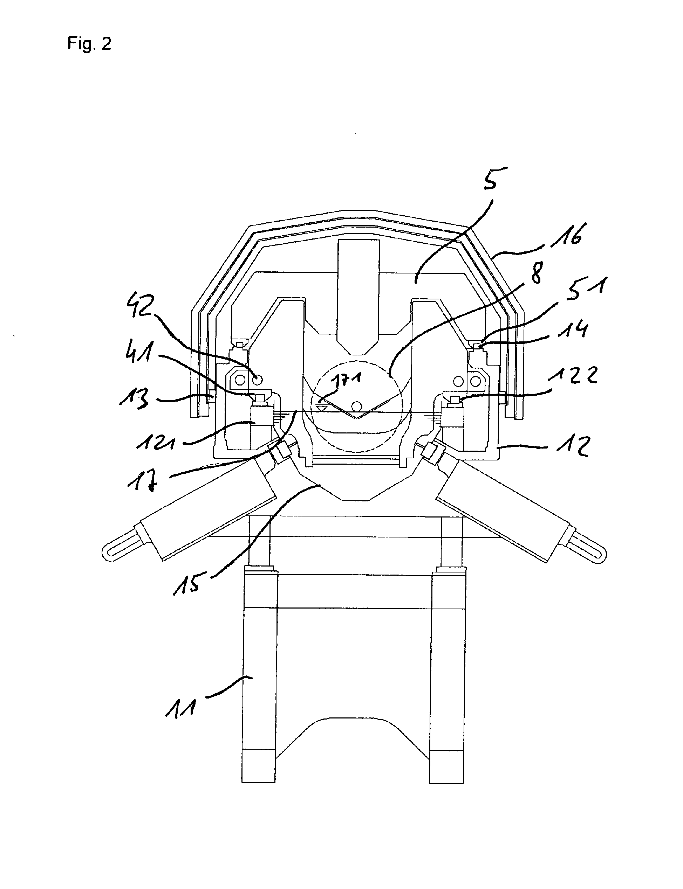

Der Maschinenkorpus 1 besteht aus einem Ständerwerk 11, welches einen umlaufenden Rahmen 12 aufnimmt, in dem das Walzenbecken 15 angeordnet ist. Der Rahmen 12 weist einen im Wesentlichen L-förmigen Querschnitt auf, wobei die horizontalen bodenseitigen Stege des Querschnitts nach innen abgewinkelt ausgebildet sind und an dem Walzenbecken 15 anliegen (vgl. Figur 2). Seitlich ist an dem Rahmen 12 an seinen Längsseiten jeweils eine äußere Führungsschiene 13 zur Aufnahme der teleskopartig angeordneten Kapselkörper 161 der Umhausung 16 angeordnet. An seiner der Umhausung 16 zugewandten Oberseite ist eine weitere, obere Führungsschiene 14 zur Aufnahme eines Multifunktionsfahrmoduls 5 angeordnet. Parallel zu den Außenwänden des Rahmens 12 ist innen an dem horizontalen Boden des Rahmens 12 an beiden Längsseiten jeweils eine Stützwand 121 angeordnet, an denen das Walzenbecken 15 fixiert ist. Auf der Oberkante der Stützwände 121 ist wiederum eine innere Führungsschiene 122 zur Aufnahme von Treibstock 2, Reitstock 3 und Setzstöcken 4 angebracht. Die innen liegenden Führungsschienen 122, 14 des Rahmens 12 sind derart positioniert, dass sie bei gefülltem Walzenbecken 15 oberhalb des Dielektrikumspiegels 171 angeordnet sind, derart, dass diese nicht in Kontakt mit dem Dielektrikum 17 kommen können.

Treibstock 2, Reitstock 3 sowie die beiden Setzstöcke 4 weisen gegenüberliegend angeordnete auskragende Arme 20, 30, 40 auf, die mit Gleitschienen 21, 31, 41 versehen sind, mit denen sie auf den gegenüberliegend angeordneten inneren Führungsschienen 122 des Rahmens 12 verschiebbar gelagert sind. Parallel zu den Gleitschienen 21, 31, 41 sind in den Armen 20, 30, 40 des Treibstocks 2, des Reitstocks 3 sowie der Setzstöcke 4 an beiden Seiten Mitnehmerdurchführungen 22 eingebracht, durch die zwei Mitnehmerstangen 61 eines Antriebsrahmens 6 geführt sind. Treibstock 2, Reitstock 3 sowie Setzstöcke 4 sind über die Mitnehmerdurchführungen 22, 32, 42 auf den Mitnehmerstangen 61 des Antriebsrahmens verschiebbar sowie über einen - nicht dargestellten - Klemmmechanismus festsetzbar.

An den seitlichen Armen 20 des Treibstocks 2 ist zu beiden Seiten jeweils eine Spindelaufnahme 23 angeordnet, durch die jeweils eine Spindel 62 geführt ist. Die Spindeln 62 sind über miteinander synchronisierte Antriebe 63 rotierbar. Zur Positionierung von Treibstock 2, Reitstock 3 sowie Setzstöcken 4 innerhalb des Rahmens 12 des Maschinenkorpus 1 werden die Spindeln 22 rotiert, wodurch der Treibstock 2 horizontal auf der inneren Führungsschiene 122 des Rahmens 12 bewegt wird. Wird der Treibstock 2 über die Mitnehmerdurchführung 22 an den Mitnehmerstangen 61 des Antriebsrahmens 6 festgesetzt, so wird der gesamte Antriebsrahmen 6 sowie die auf den Mitnehmerstangen 61 des Antriebsrahmens 6 festgesetzten Funktionselemente Reitstock 3 und Setzstöcke 4 bewegt. Hat ein Funktionselement seine Position erreicht, wird die Festsetzung durch die entsprechende Mitnehmerdurchführung 32, 42 gelöst. In diesem Fall werden die Mitnehmerstangen 61 des Antriebsrahmens 6 durch die Mitnehmerdurchführungen 32 bzw. 42 hindurchbewegt. Separate Antriebe der Funktionselemente Treibstock 2, Reitstock 3 und Setzstöcke 4 sind nicht erforderlich.

Die Setzstöcke 4 sind mit den seitlichen Armen 40 über - nicht dargestellte - Lifter verbunden, über welche die Setzstöcke 4 in Abhängigkeit vom Durchmesser der zu bearbeiteten Walze 8 vertikal verstellbar sind. Die - nicht dargestellten - Lifter können beispielsweise über einen vertikalen Spindeltrieb gebildet sein. Alternativ sind auch pneumatische oder elektrische Verstelleinrichtungen möglich.

Auf der oberen Führungsschiene 14 des Rahmens 12 ist ein Multifunktionsfahrmodul 5 verschiebbar gelagert. Hierzu weist das Multifunktionsfahrmodul 5 seitliche Arme 50 auf, welche mit Gleitschienen 51 versehen sind, die die Führungsstege 14 umgreifen. Das Multifunktionsfahrmodul ist dabei derart ausgebildet, dass es auch bei geschlossener Umhausung 16 frei über die Funktionselemente Treibstock 2, Reitstock 3 und Setzstöcke 4 über die gesamte Länge des Rahmens 12 verfahrbar ist. Das Multifunktionsfahrmodul 5 kann mit beliebigen Einrichtungen ausgestattet sein. Diese Einrichtungen können für die Maschinenüberwachung und Einrichtung selbst Verwendung finden. Des Weiteren können hier auch beispielsweise Einrichtungen für eine ergänzende Bearbeitung der texturierten Oberfläche angeordnet sein. Das Multifunktionsfahrmodul 5 ist mit einem - nicht dargestellten - separaten Antrieb versehen, sodass es unabhängig von den Antrieben 63 des Antriebsrahmens 6 verfahrbar ist.

Die an den Seitenwänden des Walzenbeckens 5 angeordneten Elektrodeneinheiten 3 sind im Ausführungsbeispiel derart angestellt, dass sich ihre verlängerte Achse in der Einspannachse der Walze 8 mit der jeweils gegenüberliegenden Elektrodeneinheit 7 in einem Winkel von 55 Grad schneidet. Die Elektrodeneinheiten 7 umfassen jeweils einen Linearmotor 71, dessen Läufer 711 mit einem Anschlussblock 72 verbunden ist, an dem ein Ausleger 73 befestigt ist, der einen Elektrodenkopf 75 zur Aufnahme einer Elektrode 76 aufweist. Der Ausleger 73 ist im Ausführungsbeispiel in Form einer Hohlwelle ausgebildet, welche in einer Bohrung 722 des Anschlussblocks 72 eingreift. Der Anschlussblock 72 ist über ein Flanschteil 721 mit dem Läufer 711 des Linearmotors 71 verbunden, derart, dass der Ausleger 73 parallel zum Läufer 711 angeordnet ist.

An ihrer dem Anschlussblock 72 zugewandten Seite ist in dem hohlwellenartig ausgebildeten Ausleger 73 ein Anschlussteil 731 abdichtend eingebracht. Das Anschlussteil 731 weist eine Leitungsdurchführung 732 für ein elektrisches Kabel 735 auf, welches mittig innerhalb des Auslegers 73 entlang seiner Mittelachse angeordnet ist und das mit dem am gegenüberliegenden Ende des Auslegers 73 angeordneten Elektrodenkopf 75 zur elektrischen Versorgung der von diesem aufgenommenen Elektrode 76 verbunden ist. Weiterhin ist in dem Anschlussteil 731 ein Fluidanschluss 733 zum Anschluss einer Fluidleitung 734 angeordnet. Die Fluidleitung 734 dient der Befüllung des hohlwellenartigen Auslegers 73 mit Dielektrikum 17. Der Ausleger 73 dient so als Zuleitung für das Dielektrikum 17 zur Spülung der Elektrode 76. Durch die Umspülung des mittig innerhalb des Auslegers 73 geführten Kabels 735 wird das Kabel 735 durch das umspülende Dielektrikum 17 gekühlt. Zugleich ist es vor äußeren Beschädigungen geschützt. Alternativ kann auch eine separate Zuleitung für das Dielektrikum zur Spülung der Elektrode angeordnet sein.

Der Elektrodenkopf 75 weist eine Bohrung 751 auf, welche das dem Anschlussblock 72 gegenüberliegende Ende des Auslegers 73 aufnimmt. Die Bohrung 751 ist derart innerhalb des Elektrodenkopfes 75 geführt, dass durch den Ausleger 73 geleitetes Dielektrikum 17 die von dem Elektrodenkopf 75 aufgenommene Elektrode 76 spült. Hierzu kann die Elektrode 76 hohl ausgebildet und mit nach außen führenden Öffnungen für den Austritt des Dielektrikums 17 versehen sein. Im Übergang zwischen Ausleger 73 und Elektrodenkopf 75 ist ein Ventil 752 angeordnet, das mit einem an dem Elektrodenkopf 75 positionierten Endschalter 77 verbunden ist. Der Endschalter 77 ist derart ausgebildet, dass er im eingefahrenen Zustand des Auslegers an der Innenwand des Walzenbeckens 15 betätigt wird, wodurch das Ventil 752 geschlossen wird. Hierdurch wird verhindert, dass im eingefahrenen Zustand, beispielsweise bei der Texturierung einer kurzen Walze, wo die entsprechende Elektrode nicht benötigt wird, eine unnötige Spülung dieser inaktiven Elektrode 76 mit Dielektrikum 17 erfolgt.

Dir Ausleger 73 der Elektrodeneinheiten 7 sind durch eine Durchführung 74 durch die Wandung des Walzenbeckens 15 geführt, durch welche die Ausleger 73 gegenüber der Wandung des Walzenbeckens 15 abgedichtet sind.

Die Linearmotoren 71 der Elektrodeneinheiten 7 sind im Ausführungsbeispiel mit einer - nicht dargestellten - Steuer- und Regeleinheit verbunden, über welche die Anstellung der Elektroden 76 an die zu texturierende Walze 8 derart erfolgt, dass der Abstand zwischen Elektrode 76 und Walze 8 während des Erodierprozesses konstant ist. Die - nicht dargestellte - Steuer- und Regeleinheit ist mit einer - ebenfalls nicht dargestellten - Auswertungseinheit verbunden, welche derart eingerichtet ist, dass auf Basis der Anstellpositionsdaten der Elektroden sowie von hinterlegten Sollmaßdaten der zu bearbeitenden Walze 8 die Maßhaltigkeit der Walze 8 ermittelt und die Ist-Maße der Walze 8 gegenüber den hinterlegten Soll-Maßen grafisch auf einem Bildschirm dargestellt werden. Die enorme Genauigkeit der eingesetzten Linearmotoren 71 ermöglicht dabei die Ermittlung geringster Abweichungen.

## Patentansprüche

1. Vorrichtung zum Texturieren einer Walze, umfassend einen Treibstock, einen Reitstock sowie wenigstens einen Setzstock zur Aufnahme einer Walze, die auf wenigstens einer Führungsschiene geführt sind, sowie beidseitig einer aufgenommenen Walze angeordnete Elektroden, wobei wenigstens ein Antrieb angeordnet ist, über den der Treibstock, der Reitstock und der wenigstens eine Setzstock entlang der wenigstens einen Führungsschiene bewegbar ist **dadurch gekennzeichnet, dass** wenigstens eine Mitnehmerstange (61) angeordnet ist, welche über einen Antrieb (63) längs der Vorrichtung linear bewegbar ist, wobei der Treibstock (2), der Reitstock (3) und der wenigstens eine Setzstock (4) wenigstens eine Mitnehmerdurchführung (22, 32, 42) aufweisen, durch welche die wenigstens eine Mitnehmerstange (61) geführt ist und die mit Mitteln zur temporären Verbindung mit der Mitnehmerstange (61) versehen ist.

2. Vorrichtung nach Anspruch 1, **dadurch gekennzeichnet, dass** die Mittel zur temporären Verbindung mit der Mitnehmerstange (61) eine von außen ansteuerbare Klemmvorrichtung umfassen.

3. Vorrichtung nach Anspruch 1 oder 2, **dadurch gekennzeichnet, dass** zwei Mitnehmerstangen (61) angeordnet sind, welche über wenigstens zwei Querstreben verbunden sind, sodass ein rechteckförmiger Rahmen (6) gebildet ist.

4. Vorrichtung nach einem der vorgenannten Ansprüche, **dadurch gekennzeichnet, dass** die wenigstens eine Mitnehmerstange (61) über den Treibstock (2) linear bewegbar ist, der mit einem Antrieb (63) verbunden ist, über den er linear entlang der wenigstens einen Führungsschiene verfahrbar ist.

5. Vorrichtung nach Anspruch 4, **dadurch gekennzeichnet, dass** der Treibstock wenigstens eine mit einem Innengewinde versehene Spindelaufnahme (23) aufweist, in die eine Gewindespindel (62) eingreift, die über einen Antrieb (63) rotierbar ist.

6. Vorrichtung nach Anspruch 5, **dadurch gekennzeichnet, dass** der Treibstock zwei gegenüberliegend angeordnete, mit einem Innengewinde versehene Spindelaufnahmen (23) aufweist, in die jeweils eine Gewindespindel (62) eingreift, wobei die beiden Gewindespindeln (62) über wenigstens einen Antrieb (63) synchron rotierbar sind.

7. Vorrichtung nach Anspruch 6, **dadurch gekennzeichnet, dass** die beiden Gewindespindeln (62) über zwei synchron gesteuerte Antriebe (63) rotierbar sind.
